# EUROPÄISCHE PATENTANMELDUNG

(11) **EP 2 530 337 A2**
(43) Veröffentlichungstag der Anmeldung: **05.12.2012**
(21) Anmeldenummer: 12169124.0
(22) Anmeldetag: 23.05.2012
(51) Int. Cl.: F16B 13/14

(54) **Injektionsanker**

(30) Priorität: 04.06.2011 DE 202011101508 U
(71) Anmelder: Dischinger, Gottfried, 86356 Neusäß (DE)
(72) Erfinder: Dischinger, Gottfried, 86356 Neusäß (DE)
(74) Vertreter: Charrier, Rapp & Liebau

(57) **Zusammenfassung**

Die Erfindung betrifft einen Injektionsanker zur Befestigung von Bauteilen an einem mit einer Dämmschicht (1) versehenen Mauerwerk (2) mit einer Ankerstange (3), einer in das Mauerwerk (2) einsetzbaren Siebhülse (4) zur Befestigung der Ankerstange (3) im Mauerwerk (1) und einem mit der Siebhülse (4) verbunden formstabilen Distanzelement (7) zur Überbrückung der Dämmschicht (1), wobei das als Hohlkörper ausgebildete Distanzelement (7) die Ankerstange (3) umgibt und eine äußere Endfläche (8) aufweist, die als feste Anlagefläche für das über die Ankerstange (3) zu befestigende Bauteil dient. Erfindungsgemäß ist auf der Ankerstange (3) ein zur Montage innerhalb des Distanzelements (7) verschiebbarer Kolben (16) angeordnet, durch den ein in das Distanzelement (7) eingespritzter Klebstoff (6) in die Siebhülse (4) einpressbar und die Ankerstange (3) formschlüssig in dem Distanzelement (7) geführt ist.

## Beschreibung

Die Erfindung betrifft einen Injektionsanker nach dem Oberbegriff des Anspruchs 1.

Ein derartiger Injektionsanker ist aus der DE 20 2007 009 225 U1 bekannt. Dieser weist ein in das Mauerwerk einsetzbares Dübelteil und ein mit dem Dübelteil verbundenes Distanzteil zur Überbrückung einer auf dem Mauerwerk angeordneten Dämmschicht auf. In das mit einer Anlagefläche versehene Distanzteil und das Dübelteil wird ein mit einem Gewinde versehenes stangenförmiges Innenteil eingesetzt. Die Befestigung des Innenteils erfolgt über einen Verbundmörtel, der vor dem Einstecken des Innenteils in das Dübelteil und das Distanzteil eingespritzt wird. Der Außendurchmesser des stangenförmigen Innenteils entspricht dem Innendurchmesser des Distanzteils und des Dübelteils, so dass der Verbundmörtel beim Einsetzen des Innenteils in die Siebhülse und durch diese hindurch in den Hohlraum des Mauerwerks gedrückt wird. Um das Innenteil in dem Dübelteil zu sichern, sind am vorderen Ende des Innenteils Abflachungen und quer zur Längsachse des Innenteils verlaufende Durchgangsbohrungen vorgesehen, die von Verbundmörtel durchdrungen werden. Die Herstellung des Innenteils mit dem speziellen Profil zur Gewährleistung einer sicheren Halterung ist jedoch aufwändig und mit entsprechenden Kosten verbunden.

Aufgabe der Erfindung ist es, einen kostengünstigen und einfach herstellbaren Injektionsanker zu schaffen, der auch ohne großen Fertigungsaufwand eine sichere Befestigung von Bauteilen an einem mit einer Dämmschicht versehenen Mauerwerk ermöglicht.

Diese Aufgabe wird durch einen Injektionsanker mit den Merkmalen des Anspruchs 1 gelöst. Vorteilhafte Ausgestaltungen der Erfindung sind in den Unteransprüchen angegeben.

Der erfindungsgemäße Injektionsanker zeichnet sich dadurch aus, dass auf der Ankerstange ein zur Montage innerhalb des Distanzelements verschiebbarer Kolben angeordnet ist, durch den ein in das Distanzelement eingespritzter Klebstoff in die Siebhülse einpressbar und die Ankerstange formschlüssig in dem Distanzelement geführt ist. Der Kolben übernimmt nicht nur das Einspritzen des Klebstoffs in die Siebhülse zur Verankerung der Ankerstange im Mauerwerk, sondern sorgt durch seine formschlüssige Führung innerhalb des Distanzelements auch für eine stabile Halterung der Ankestange. Die Ankerstange wird durch den Kolben seitlich geführt, wodurch die Montage eines Bauteils vereinfacht wird. Der Injektionsanker besteht aus einfach herstellbaren Einzelteilen und ermöglicht dadurch eine kostengünstige Herstellung.

In einer besonders zweckmäßigen Ausführungsform wird zwischen der Ankerstange und der Siebhülse ein Ringraum gebildet, der den eingepressten Klebstoff aufnimmt. Der eingepresste Klebstoff füllt den Ringraum vollständig aus und tritt weiterhin durch die Siebhülse in den Zwischenraum zwischen der Siebhülse und dem Loch im Mauerwerk aus. Dadurch wird sowohl die Siebhülse als auch die Ankerstange sicher im Mauerwerk befestigt.

In einer weiteren zweckmäßigen Ausführungsform sind das vorzugsweise aus Metall bestehenden Distanzelement und die z.B. aus Kunststoff bestehende Siebhülse über eine Mutter, eine Steckverbindung, einen Adapter oder eine andere geeignete Verbindung lösbar miteinander verbunden. Dadurch kann der Injektionsanker einfach hergestellt werden.

Das Distanzelement besteht zweckmäßigerweise aus einer mit der Siebhülse verbundenen Distanzhülse und einer Aufsatzhülse, die gegenüber dem Distanzrohr verstellbar ist. Die Verstellbarkeit erlaubt eine einfache Anpassung des Distanzelements an die zu überbrückende Dämmschicht des Mauerwerks. Zur Verstellung der Aufsatzhülse weist das Distanzrohr vorzugsweise ein Außengewinde und die Aufsatzhülse vorzugsweise ein Innengewinde auf.

Nach einer zweckmäßigen Ausführungsform entspricht die Länge des Kolbens im Wesentlichen der Länge der Distanzhülse. Dadurch wird die Ankerstange über einen großen Bereich innerhalb der Distanzhülse sicher geführt. Der Kolben reicht in einer zweckmäßigen Ausführungsform auch bis in die Siebhülse 4.

In einer weiteren vorteilhaften Ausführung weist der Kolben an seiner Außenseite Längsschlitze oder sonstige Vertiefungen auf, die dazu dienen Kleber aufzunehmen. Bei dem Einsetzvorgang der Ankerstange und des Kolbens wird der eingespritzte Kleber in die Siebhülse und die Längsschlitze gedrückt. In der erfindungsgemäßen Ausführungsform wird somit zusätzlich neben der Befestigung der Ankerstange durch den Kleber und der formschlüssigen Verbindung des Kolbens mit dem Distanzrohr eine zusätzliche Befestigung durch den Kleber ermöglicht. Der Kolben kann auch durch mechanische Mittel axial innerhalb des Distanzelements gehalten werden, um ein Herausdrehen der Ankerstange bei der Montage zu verhindern.

Zur Reduzierung von Wärmebrücken kann der Kolben vorzugsweise aus Kunststoff bestehen.

In einer weiteren vorteilhaften Ausgestaltung ragt die Ankerstange bis in die Siebhülse und kann dabei vollständig von Kunststoff umhüllt sein, um eine thermische Trennung zu erreichen.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: eine schematische Darstellung des eingesetzten Injektionsankers in einem Mauerwerk mit Dämmschicht;
- **Figur 2**: einen Injektionsanker zu Beginn der Montage;
- **Figur 3**: einen Injektionsanker nach der Montage und
- **Figur 4**: einen Querschnitt einer weiteren Ausführungsform eines eingesetzten Injektionsankers in einem Mauerwerk mit Dämmschicht.

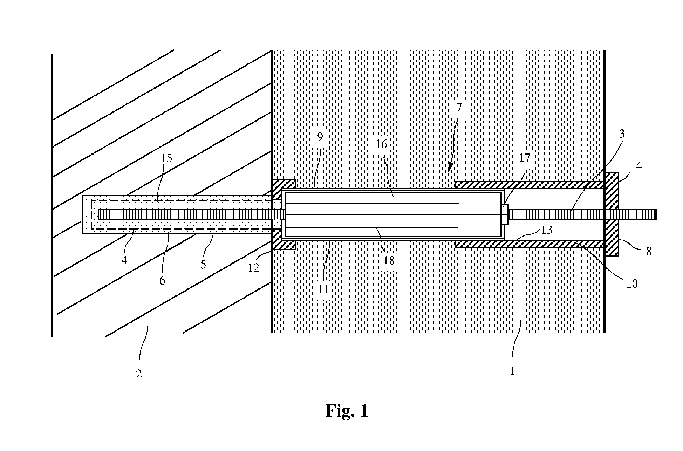

In Figur 1 ist ein Injektionsanker zur Befestigung von Bauteilen an einem mit einer Dämmschicht 1 versehenen Mauerwerk 2 gezeigt. Der Injektionsanker umfasst eine Ankerstange 3, die über eine Siebhülse 4 in ein entsprechendes Loch 5 im Mauerwerk 2 eingesetzt und durch einen Injektionsmörtel oder einen anderen geeigneten Klebstoff 6 im Mauerwerk 2 verankert ist. Das für die Montage der Siebhülse 4 im Mauerwerk 2 vorgesehene Loch 5 weist einen etwas größeren Durchmesser als die Siebhülse 4 auf.

Die im Mauerwerk 2 angeordnete Siebhülse 4 ist mit einem die Ankerstange 3 umgebenden rohrförmigen Distanzelement 7 zur Überbrückung der Dämmschicht 1 verbunden. Das Distanzelement 7 enthält an seinem äußeren Ende eine feste Anlagefläche 8, die als Anlage für die Befestigung von Halterungen oder anderen Bauteilen mit Hilfe der gegenüber der Anlage nach außen vorstehenden Ankerstange 3 dient. Die zu befestigenden Bauteile liegen an der festen Anlagefläche 8 des Distanzelements an und können dadurch sicher fixiert werden. Bei dem gezeigten Ausführungsbeispiel ist Ankerstange 3 als Gewindestange ausgeführt. Dadurch können die Bauteile mit Hilfe einer auf die Ankerstange 3 aufgeschraubten Mutter schnell und einfach gegen die Anlagefläche 8 gespannt werden.

Das aus Metall oder aus einem anderen formstabilen Material hergestellte Distanzelement 7 besteht bei der in Figur 1 gezeigten Ausführungsform aus einer mit der Siebhülse 4 lösbar verbundenen Distanzhülse 9 und einer gegenüber der Distanzhülse 9 verstellbaren Aufsatzhülse 10. Die hier aus einem Gewinderohr mit Außengewinde 11 bestehende Distanzhülse 9 ist über eine Mutter 12 mit der aus Kunststoff bestehenden Siebhülse 4 verbunden. Die Aufsatzhülse 10 ist über ein zu dem Außengewinde 11 der Distanzhülse 9 korrespondierendes Innengewinde 13 auf die Distanzhülse 9 aufgeschraubt, so dass durch Drehung der Aufsatzhülse 10 die Gesamtlänge des Distanzelements 7 zur schnellen und einfachen Anpassung an die Dicke der Dämmschicht 1 verändert werden kann. Die Aufsatzhülse 10 enthält an ihrer Außenseite eine scheibenförmige Abdeckung 14, an der sich die Anlagefläche 8 befindet. Die Anlagefläche 8 kann aber auch an einer in die Aufsatzhülse 10 eingesteckten Endkappe ausgebildet sein.

Wie aus der Zeichnung ersichtlich ist, weist die Ankerstange 3 einen deutlich geringeren Außendurchmesser als der Innendurchmesser der Siebhülse 4 auf. Dadurch wird zwischen der Ankerstange 3 und der Siebhülse 4 ein ausreichend großer Ringraum 15 für die Aufnahme von Klebstoff 6 gebildet. Auf der Ankerstange 3 ist ein an den Innendurchmesser der Distanzhülse 10 angepasster Kolben 16 angeordnet. Der Kolben 16 ist zum Auspressen des bei der Montage in die Distanzhülse 9 eingebrachten Klebstoffs 6 in die Siebhülse 4 und in den Zwischenraum zwischen der Siebhülse 4 und dem Loch 5 bestimmt. Der Kolben 16 weist daher einen nur geringfügig kleineren Außendurchmesser als der Innendurchmesser der Distanzhülse 9 auf. Dadurch wird der Kolben 16 bei seiner Verschiebung auch innerhalb der Distanzhülse 9 geführt.

Der Kolben 16 ist derart auf der Ankerstange 3 angeordnet, dass der Kolben 16 bei seiner in Figur 1 gezeigten Montagestellung in der Distanzhülse 9 sitzt, während ein vorderer Teil der Ankerstange 3 in die Siebhülse 4 und ein hinterer Teil der Ankerstange 3 durch die Aufsatzhülse 10 ragt und durch die scheibenförmige Abdeckung 14 nach außen vorsteht. Der Kolben 16 weist im Wesentlichen dieselbe Länge wie die Distanzhülse 9 auf.

Bei dem gezeigten Ausführungsbeispiel ist der vorzugsweise aus Kunststoff bestehende Kolben 16 nur auf die Ankerstange 3 aufgesteckt. Durch eine auf die Ankerstange 3 aufgeschraubte Sicherungsmutter 17 wird die Axialverschiebung des Kolbens 16 auf der Ankerstange 3 nach hinten begrenzt. Eine Einstellung der Lage des Kolbens 16 auf der Ankerstange 3 kann durch entsprechende Verstellung der Sicherungsmutter 17 erfolgen. Auf der Außenseite des Kolbens 16 sind mehrere Längsnuten oder Längsschlitze 18 zur Aufnahme des Klebstoffs 6 angeordnet. Die Längsschlitze 18 sind zweckmäßigerweise nur an der inneren Stirnseite des Kolbens 16 offen und erstrecken sich nicht über die gesamte Länge des Kolbens 16, so dass der Klebstoff 6 beim Einpressen in die Siebhülse 4 nicht über der Kolben 16 nach rückwärts durchgedrückt wird.

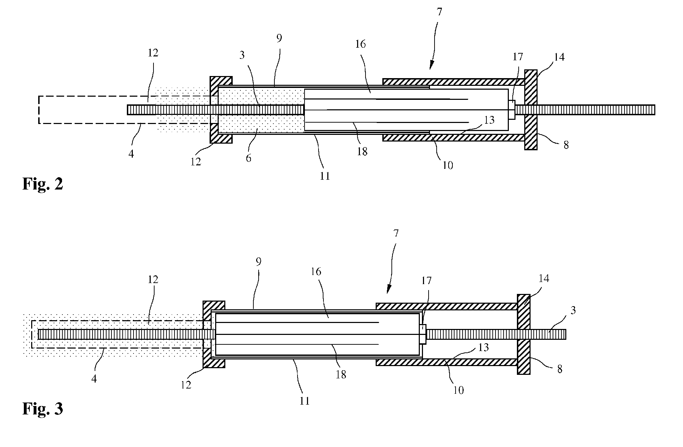

Im Folgenden wird die Montage des vorstehend beschriebenen Injektionsankers anhand der Figuren 2 und 3 erläutert. Aus Gründen der Übersichtlichkeit wurde hier auf eine Darstellung des Mauerwerks und der Dämmschicht verzichtet.

Für die Montage des Injektionsankers wird gemäß Figur 1 zunächst in die Dämmschicht 1 und das Mauerwerk 2 ein zur Aufnahme der Siebhülse 4 und des Distanzelements 7 geeignetes Loch 5 gebohrt. Dann wird die Siebhülse 4 und die mit ihr über die Mutter 12 fest verbundenen Distanzhülse 9 in das gebohrte Loch 5 eingesteckt, bis die Siebhülse 4 in dem Mauerwerk 2 sitzt. Durch Drehung der Aufsatzhülse 10 kann die Länge des Distanzelements 7 in gewünschter Weise an die Dicke der Dämmschicht 1 angepasst werden.

Anschließend wird ein Injektionsmörtel oder ein anderer geeigneter Klebstoff 6 in die Distanzhülse 9 eingespritzt. Dann wird die Ankerstange 3 mit dem aufgesteckten Kolben 4 in die Distanzhülse 9 eingeschoben, wie dies in Figur 2 gezeigt ist. Durch den über die Sicherungsmutter 17 auf der Ankerstange 3 gegen Verschiebung gesicherten Kolben 4 wird der in der Distanzhülse 9 befindliche Klebstoff 6 zunächst in die Siebhülse 4 und durch deren Öffnungen hindurch in den Zwischenraum zwischen Siebhülse 4 und dem Loch 5 im Mauerwerk 2 gedrückt.

Wenn der Kolben 4 mit Hilfe der Ankerstange 3 in seine in Figur 1 und 3 gezeigte Montagestellung bis zum Anschlag an die Mutter 12 gedrückt wird, reicht der vordere Teil der Ankerstange 3 bis zum inneren Ende des Siebhülse 4 und sowohl der gesamte Ringraum 15 zwischen der Ankerstange 3 und der Siebhülse 4 als auch der Zwischenraum zwischen der Siebhülse 4 und dem Loch 5 des Mauerwerks 2 ist mit Klebstoff 6 aufgefüllt. Dadurch wird sowohl eine sichere Verankerung der Siebhülse 4 im Mauerwerk 2 als auch eine sichere Halterung der Ankerstange 3 innerhalb der Siebhülse 4 ermöglicht.

Nach dem Aushärten des Klebstoffs 6 kann dann die scheibenförmige Abdeckung 14 mit der äußeren Anlagefläche 8 auf den hinteren Teil der Ankerstange 3 aufgesteckt und zur Anlage an der der Aufsatzhülse 10 gebracht werden. Dann kann z.B. eine Halterung für einen Kamin, eine Markise oder dgl. unter Anlage an der äußeren Anlagefläche 8 auf dem hinteren Teil der Ankerstange 3 befestigt werden.

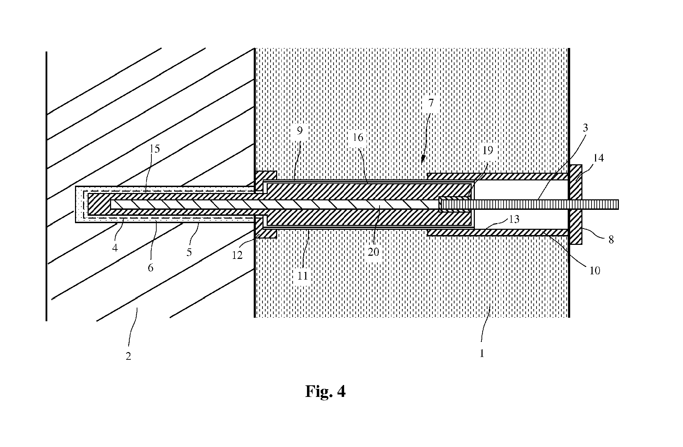

Bei dem in Figur 4 gezeigten Ausführungsbeispiel reicht die Ankerstange 3 nicht in die Siebhülse 4, sondern ist über eine Gewindebuchse 19 nur an einem Ende des Kolbens 16 befestigt. Die Gewindebuchse 19 kann aber auch von dem z.B. aus Kunststoff bestehenden Kolben 16 umspritzt sein. Der Kolben 16 ist derart ausgebildet, dass er im montierten Zustand bis in die Siebhülse 4 reicht. In dem Kolben 16 kann außerdem eine z.B. als Metallstange ausgeführte zusätzliche Verstärkung 20 angeordnet sein. Die hier als Metallstab ausgebildete Verstärkung 20 kann mit der Gewindebuchse 19 verbunden sein. Sowohl die zusätzliche Verstärkung 20 als auch die Gewindebuchse 19 sind von dem hier abgesetzten Kolben 16 umspritzt. Der Kolben 16 ist somit mit der Ankerstange 3 fest verbunden und einteilig ausgebildet. Außerdem weist der Kolben 16 an seiner Außenseite mehrere unterbrochene oder durchgehende Längsnuten oder Längsschlitze 18 zur Aufnahme des Klebstoffs 6 auf. Die Längsschlitze 18 sind zweckmäßigerweise nur an der inneren Stirnseite des Kolbens 16 offen und erstrecken sich nicht über die gesamte Länge des Kolbens 16, so dass der Klebstoff 6 beim Einpressen in die Siebhülse 4 nicht über der Kolben 16 nach rückwärts durchgedrückt wird. Ansonsten entspricht der Injektionsanker von Figur 4 der Ausführungsform der Figuren 1 bis 3, so dass einander entsprechende Bauteile auch mit denselben Bezugszeichen versehen sind.

Der vorstehend beschriebene Injektionsanker könnte auch bereits mit dem Klebstoff zusammen vorkonfektioniert sein, indem z.B. zwischen der Siebhülse 4 und dem vorderen Ende der Distanzhülse 9 eine dicht abschließende Folie vorgesehen ist, die erst beim Einschieben des Kolbens in seine Montagestellung von der Ankerstange 3 durchstoßen wird. Dann könnte der Injektionsanker zusammen mit dem zunächst abgedichtet zwischen der Folie und dem Kolben gehaltenen Klebstoff verkauft werden, wodurch eine Montage nochmals vereinfacht wird.

## Patentansprüche

1. Injektionsanker zur Befestigung von Bauteilen an einem mit einer Dämmschicht
(1) versehenen Mauerwerk (2) mit einer Ankerstange (3), einer in das Mauerwerk
(2) einsetzbaren Siebhülse (4) zur Befestigung der Ankerstange (3) im Mauerwerk (1) und einem mit der Siebhülse (4) verbunden formstabilen Distanzelement (7) zur Überbrückung der Dämmschicht (1), wobei das als Hohlkörper ausgebildete Distanzelement (7) die Ankerstange (3) umgibt und eine äußere Endfläche (8) aufweist, die als feste Anlagefläche für das über die Ankerstange (3) zu befestigende Bauteil dient, **dadurch gekennzeichnet, dass** auf der Ankerstange
(3) ein zur Montage innerhalb des Distanzelements (7) verschiebbarer Kolben (16) angeordnet ist, durch den ein in das Distanzelement (7) eingespritzter Klebstoff (6) in die Siebhülse (4) einpressbar und die Ankerstange (3) formschlüssig in dem Distanzelement (7) geführt ist.

2. Injektionsanker nach Anspruch 1, **dadurch gekennzeichnet, dass** zwischen der Ankerstange (3) und der Siebhülse (4) ein Ringraum (15) zur Aufnahme des Klebstoffs ausgebildet ist.

3. Injektionsanker nach Anspruch 1 oder 2, **dadurch gekennzeichnet, dass** das Distanzelement (7) und die Siebhülse (4) lösbar miteinander verbunden sind.

4. Injektionsanker nach einem der Ansprüche 1 bis 3, **dadurch gekennzeichnet, dass** das Distanzelement (7) aus einer mit der Siebhülse (4) verbundenen Distanzhülse (9) und einer gegenüber der Distanzhülse (9) verstellbaren Aufsatzhülse (10) besteht.

5. Injektionsanker nach Anspruch 4, **dadurch gekennzeichnet, dass** die Distanzhülse (9) und die Aufsatzhülse (10) über ein Gewinde (11, 13) verstellbar miteinander verbunden sind.

6. Injektionsanker nach einem der Ansprüche 1 bis 5, **dadurch gekennzeichnet, dass** die Ankerstange (3) als Gewindestange ausgebildet ist.

7. Injektionsanker nach einem der Ansprüche 1 bis 6, **dadurch gekennzeichnet, dass** die Ankerstange (3) bis in die Siebhülse (4) ragt.

8. Injektionsanker nach Anspruch 7, **dadurch gekennzeichnet, dass** der in die Siebhülse (4) ragende Teil der Ankerstange (3) vollständig von Kunststoff umhüllt ist.

9. Injektionsanker nach einem der Ansprüche 1 bis 8, **dadurch gekennzeichnet, dass** die Ankerstange (3) in eine Gewindebuchse (19) an einem Ende des Kolbens (16) eingeschraubt ist.

10. Injektionsanker nach einem der Ansprüche 1 bis 9, **dadurch gekennzeichnet, dass** der Kolben (16) verschiebbar auf der Ankerstange (3) geführt und auf der Ankerstange (3) ein Begrenzungselement (17) zur Begrenzung der Axialverschiebung des Kolbens (16) auf der Ankerstange (3) angeordnet ist.

11. Injektionsanker nach einem der Ansprüche 4 bis 10, **dadurch gekennzeichnet, dass** die Länge des Kolbens (16) im Wesentlichen der Länge der Distanzhülse (9) entspricht.

12. Injektionsanker nach einem der Ansprüche 4 bis 11, **dadurch gekennzeichnet, dass** der Außendurchmesser des Kolbens (16) zur Führung innerhalb der Distanzhülse (9) ausgebildet ist.

13. Injektionsanker nach einem der Ansprüche 1 bis 12, **dadurch gekennzeichnet, dass** der Kolben (16) bis in die Siebhülse (4) reicht.

14. Injektionsanker nach einem der Ansprüche 1 bis 13, **dadurch gekennzeichnet, dass** der Kolben (16) an seiner Außenseite Längsschlitze (18) oder sonstige Vertiefungen zur Aufnahme des Klebstoffs aufweist.

15. Injektionsanker nach einem der Ansprüche 1 bis 14, **dadurch gekennzeichnet, dass** die äußere Endfläche (8) an einer scheibenförmigen Abdeckung (14) ausgebildet ist.

16. Injektionsanker nach einem der Ansprüche 1 bis 15, **dadurch gekennzeichnet, dass** der Kolben (16) aus Kunststoff besteht.
